# EUROPÄISCHE PATENTSCHRIFT

(11) **EP 0 608 805 B1**
(45) Veröffentlichungstag und Bekanntmachung des Hinweises auf die Patenterteilung: **09.04.1997**
(21) Anmeldenummer: 94100963.1
(22) Anmeldetag: 24.01.1994
(51) Int. Cl.: A47J 31/40

(54) **Automatische Kaffeemaschine für ein Kaffeegetränk, in welcher gemahlener Kaffee in einer Aufgusskammer gepresst wird**
Automatic coffee machine for making a coffee infusion whereby ground coffee is pressed in a brewing chamber
Machine à café automatique pour faire un café, obtenu en comprimant du café moulu dans une chambre à infusion

(30) Priorität: 27.01.1993 IT MI930129
(43) Veröffentlichungstag der Anmeldung: 03.08.1994
(73) Patentinhaber: CIMBALI S.p.A., I-20082 Binasco (MI) (IT)
(72) Erfinder: Locati, Santino, Milano (IT)
(74) Vertreter: Jaumann, Paolo

(56) Entgegenhaltungen:
- EP-A- 0 496 688
- EP-A- 0 521 561

## Beschreibung

Die vorliegende Erfindung bezieht sich auf eine automatische Kaffeemaschine, worin der gemahlene Kaffee in eine Aufgusskammer gelangt, in welcher der Pulverkaffee zwischen einem Aufgusskolben und einem Filtrierkolben gepresst wird und aus welcher das allein oder zusammen mit Milch als Cappuccino lieferbares Kaffeegetränk ausfliesst, wobei ein torischer Dichtungsring die Dichtheit zwischen der Aufgusskammer und dem Aufgusskolben herstellt, während letzterer in der Aufgusskammer dazu tätig ist, damit auf den gemahlenen Kaffee eine Verdichtung ausgeübt wird (siehe die Druckschrift EP-A-0 521 561).

Bei bekannten Maschinen dieser Gattung besitzt der Aufgusskolben an ortsfester Stelle einen torischen Dichtungsring (sogenannten O-Ring).

Diese Dichtung ist einem erheblichen Verschleiss ausgesetzt, welcher auf die beim Eintritt des Aufgusskolbens in die Aufgusskammer entstehenden Eintrittskräfte und auf die beim ganzen Kolbenhub erzeugte Gleitung zurückzuführen ist.

Die vorliegende Erfindung verfolgt nun hauptsächlich den Zweck, den Verschleiss der genannten Dichtung wesentlich zu vermindern.

Dieser und weitere Zwecke und Vorteile der vorliegenden Erfindung, die der nachstehenden Beschreibung entnehmbar sind, werden hauptsächlich durch folgende Massnahmen erzielt:
- der Aufgusskolben ist in zwei entgegen der Wirkung einer Feder ineinander verschiebbare Teile geteilt,
- der als erster in die Aufgusskammer eintretende Teil des Aufgusskolbens stellt für den Dichtungsring einen ersten, flachen, zur Eintrittsrichtung des Aufgusskolbens senkrechten Sitz dar,
- der zweite, nachher in die Aufgusskammer eintretende Teil des Aufgusskolbens stellt für den Dichtungsring einen zweiten, konischen Sitz dar, dessen Durchmesser mit abnehmendem Abstand der beiden Teile des Aufgusskolbens in der Aufgusskammer zunimmt.

Nach einer Weiterbildung der Erfindung sind der Dichtungsring, die Gegenfeder und die beiden Sitze für den Dichtungsring vorteilhaft derart bemessen, dass der Dichtungsring, während der durch den Aufgusskolben auf den Kaffee ausgeübten Verdichtung, die innere Wandung der Aufgusskammer nicht berührt solange die zur Verdichtung des gemahlenen Kaffees ausgeübte Kraft die Federkraft der Gegenfeder unterschreitet.

Nach einer vorteilhaften Weiterbildung der Erfindung erfährt der Dichtungsring, während des Eintrittes des Aufgusskolbens in die Aufgusskammer, eine Verschiebung auf seinem konischen Sitz, welche seine fortschreitende Näherung an die innere Wandung der Aufgusskammer bis zur Herstellung der gewünschten Dichtheit bewirkt.

In den beiliegenden Zeichnungen ist ein Ausführungsbeispiel der vorliegenden Erfindung, auf welches letztere allerdings nicht beschränkt ist, schematisch dargestellt. Dabei zeigen:
- Figur 1: den torischen Dichtungsring in der Aufgusskammer während der durch den Aufgusskolben ausgeübten Verdichtung,
- Figur 2: den torischen Dichtungsring in der Aufgusskammer im Endabschnitt der durch den Aufgusskolben ausgeübten Verdichtung.

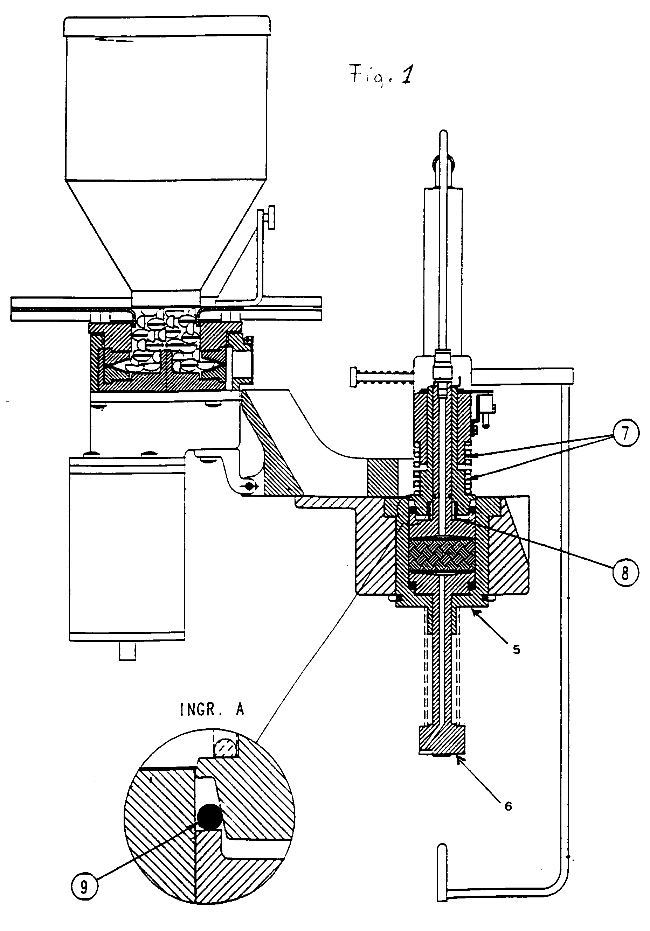

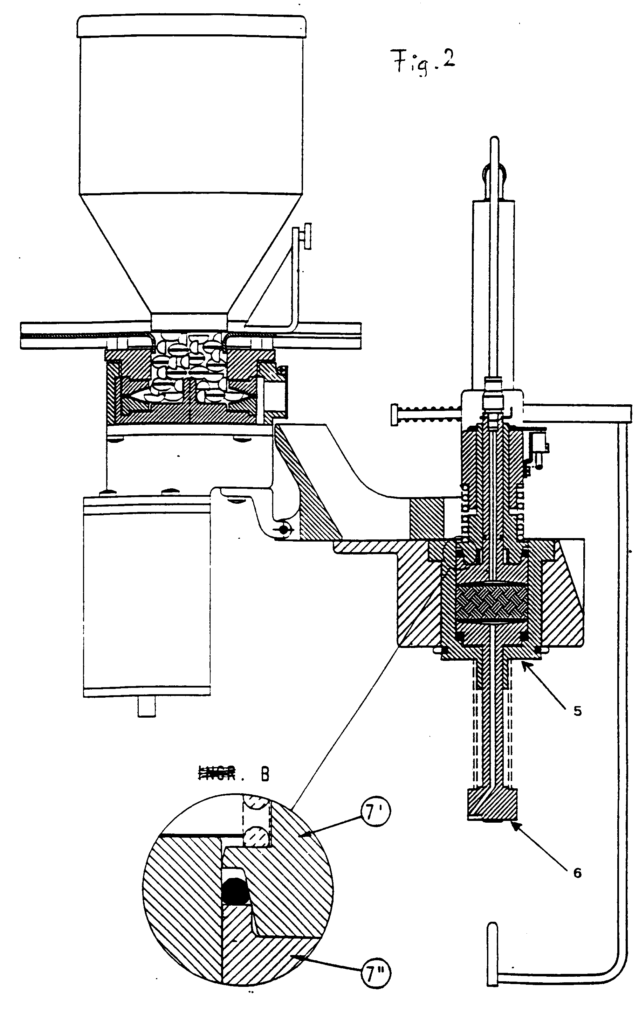

In dem in Figur 1 dargestellten Zustand wird der aus den beiden Teilen 7' und 7'' bestehende Aufgusskolben 7 (siehe Figur 2) in die Aufgusskammer 5 gesenkt.

Solange die zur Verdichtung des gemahlenen Kaffees aufgebrachte Kraft die Federkraft der Gegenfeder 8 unterschreitet verbleibt der Dichtungsring 9 in der im vergrösserten Ausschnitt A gezeigten Stellung.

Wie ersichtlich, ist der Dichtungsring keiner Gleitung an der inneren Wandung der Aufgusskammer 5 ausgesetzt, sondern bleibt am minimalen Durchmesser des konischen Sitzes positioniert, ohne dabei die genannte Kammer zu berühren.

In dem in Figur 2 gezeigten Arbeitszustand, in welchem die Verdichtungs-Kraft zur Verdichtung des gemahlenen Kaffees die Federkraft der Gegenfeder 8 überschreitet, wird der bis dahin zwischen den beiden Teilen 7', 7'' des Aufgusskolbens 7 bestehende Zwischenraum, siehe den vergrösserten Ausschnitt B, beseitigt.

Dadurch kommt der Dichtungsring auf dem maximalen Durchmesser des konischen Sitzes zu liegen und bewirkt somit einen optimalen Druck auf die innere Wandung der Aufgusskammer 5 und dementsprechend die gewünschte Dichtheit.

Der erfindungsgemässe Lösungsgedanke ermöglicht es also eine Gleitung des Dichtungsringes 9 fast vollkommen zu vermeiden und damit den Verschleiss dieses Dichtungsringes auf ein Minimum zu vermindern.

## Patentansprüche

1. Automatische Kaffeemaschine, worin der gemahlene Kaffee in eine Aufgusskammer (5) gelangt, in welcher der Pulverkaffee zwischen einem Aufgusskolben (7) und einem Filtrierkolben (6) gepresst wird und aus welcher das allein oder zusammen mit Milch als Cappuccino lieferbare Kaffeegetränk ausfliesst, wobei ein torischer Dichtungsring (9) die Dichtheit zwischen der Aufgusskammer (5) und dem Aufgusskolben (7) herstellt, während letzterer in der Aufgusskammer (5) dazu tätig ist, damit auf den gemahlenen Kaffee eine Verdichtung ausgeübt wird, gekennzeichnet durch nachstehende Merkmale:
- der Aufgusskolben (7) ist in zwei entgegen der Wirkung einer Feder (8) ineinander verschiebbare Teile (7', 7'') geteilt,
- der als erster in die Aufgusskammer (5) eintretende Teil (7'') des Aufgusskolbens (7) stellt für den Dichtungsring (9) einen ersten, flachen, zur Eintrittsrichtung des Aufgusskolbens (7) senkrechten Sitz dar,
- der zweite, nachher in die Aufgusskammer (5) eintretende Teil (7') des Aufgusskolbens (7) stellt für den Dichtungsring (9) einen zweiten, konischen Sitz dar, dessen Durchmesser mit abnehmendem Abstand der beiden Teile (7', 7'') des Aufgusskolbens (7) in der Aufgusskammer (5) zunimmt.

2. Automatische Kaffee Maschine nach Anspruch 1, dadurch gekennzeichnet, dass der Dichtungsring (9), die Gegenfeder (8) und die beiden Sitze für den Dichtungsring (9) derart bemessen sind, dass der Dichtungsring (9), während der durch den Aufgusskolben (7) auf den Kaffee ausgeübten Verdichtung, die innere Wandung der Aufgusskammer (5) nicht berührt solange die zur Verdichtung des gemahlenen Kaffees ausgeübte Kraft die Federkraft der Gegenfeder (8) unterschreitet.

3. Automatische Kaffee Maschine nach Anspruch 1 oder 2, dadurch gekennzeichnet, dass der Dichtungsring (9), während des Eintrittes des Aufgusskolbens (7) in die Aufgusskammer (5), eine Verschiebung auf seinem konischen Sitz erfährt, welche seine fortschreitende Näherung an die innere Wandung der Aufgusskammer (5) bis zur Herstellung der gewünschten Dichtheit bewirkt.

## Claims

1. Automatic coffee machine in which the ground coffee passes into an infusion chamber (5), in which the powdered coffee is pressed between an infusion piston (7) and a filtering piston (6) and from which the coffee drink, which can be supplied on its own or together with milk as cappuccino, flows, a toric sealing ring (9) producing the sealing between the infusion chamber (5) and the infusion piston (7), while the task of the latter in the infusion chamber (5) is thus to compact the ground coffee, characterized by the following features:
- the infusion piston (7) is divided into two parts (7', 7''), which can be displaced one inside the other counter to the action of a spring (8),
- the part (7'') of the infusion piston (7) which is first to enter into the infusion chamber (5) constitutes, for the sealing ring (9), a first, flat seat which is perpendicular to the direction in which the infusion piston (7) enters,
- the second part (7') of the infusion system (7), this part entering subsequently into the infusion chamber (5), constitutes, for the sealing ring (9), a second, conical seat whose diameter increases as the distance between the two parts (7', 7'') of the infusion piston (7) in the infusion chamber (5) decreases.

2. Automatic coffee machine according to Claim 1, characterized in that the sealing ring (9), the counter-spring (8), and the two seats for the sealing ring (9) are dimensioned such that, as the coffee is compacted by the infusion piston (7), the sealing ring (9) does not come into contact with the inner wall of the infusion chamber (5) as long as the force exerted for compacting the ground coffee in less than the spring force of the counter-spring (8).

3. Automatic coffee machine according to Claim 1 or 2, characterized in that, as the infusion piston (7) enters into the infusion chamber (5), the sealing ring (9) undergoes displacement on its conical seat, this displacement causing it to progress towards the inner wall of the infusion chamber (5) until the desired degree of sealing is produced.

## Revendications

1. Machine à café automatique, dans laquelle le café moulu arrive dans une chambre à infusion (5) dans laquelle le café en poudre est comprimé entre un piston d'infusion (7) et un piston de filtrage (6) et de laquelle s'écoule le café qui peut être livré soit seul, soit avec du lait en tant que cappuccino, un joint torique d'étanchéité (9) établissant l'étanchéité entre la chambre à infusion (5) et le piston d'infusion (7), tandis que celui-ci est actif dans la chambre à infusion (5) afin qu'une compression soit exercée sur le café moulu, caractérisée par les caractéristiques suivantes :
- le piston d'infusion (7) est divisé en deux parties (7', 7'') pouvant être déplacées l'une dans l'autre contre l'action d'un ressort (8),
- la partie (7'') du piston d'infusion (7) entrant la première dans la chambre à infusion (5) représente pour le joint d'étanchéité (9) un premier siège, plat, perpendiculaire à la direction d'entrée du piston d'infusion (7),
- la seconde partie (7') du piston d'infusion (7), qui entre après dans la chambre à infusion (5), représente pour le joint d'étanchéité (9) un second siège, conique, dont le diamètre à mesure que la distance entre les deux pièces (7', 7'') du piston d'infusion (7) diminue, augmente dans la chambre à infusion (5).

2. Machine à café automatique selon la revendication 1, caractérisée en ce que le joint d'étanchéité (9), le ressort antagoniste (8) et les deux sièges pour le joint d'étanchéité (9) sont dimensionnés de manière à ce que, pendant la compression exercée sur le café par le piston d'infusion (7), le joint d'étanchéité (9) ne soit pas en contact avec la paroi interne de la chambre à infusion (5) tant que la force exercée pour la compression du café moulu est inférieure à la force élastique du ressort antagoniste (8).

3. Machine à café automatique selon l'une des revendications 1 ou 2, caractérisée en ce que, pendant l'entrée du piston d'infusion (7) dans la chambre à infusion (5), le joint d'étanchéité (9) subit un déplacement sur son siège conique, lequel déplacement entraîne son rapprochement progressif de la paroi interne de la chambre à infusion (5) jusqu'à obtention de l'étanchéité souhaitée.
